# EUROPÄISCHE PATENTSCHRIFT

(11) **EP 1 655 829 B1**
(45) Veröffentlichungstag und Bekanntmachung des Hinweises auf die Patenterteilung: **15.12.2010**
(21) Anmeldenummer: 05023720.5
(22) Anmeldetag: 29.10.2005
(51) Int. Cl.: H02P 6/22, H02P 6/24, H02P 25/02

(54) **Schaltungsanordnung und Verfahren zur Steuerung eines Elektromotors, insbesondere einer Waschmaschine**
Circuit arrangement and method for control of an electric motor, in particular of a washing machine
Circuit et procédé pour le contrôle d'un moteur électrique, en praticulier d'une machine à laver

(30) Priorität: 04.11.2004 DE 102004053861; 01.03.2005 DE 102005009341
(43) Veröffentlichungstag der Anmeldung: 10.05.2006
(73) Patentinhaber: Diehl AKO Stiftung & Co. KG, 88239 Wangen (DE)
(72) Erfinder: Weinmann, Martin, 88339 Bad Waldsee (DE)
(74) Vertreter: Diehl Patentabteilung

(56) Entgegenhaltungen:
- EP-A- 0 662 266
- EP-A- 0 935 336
- DE-A1- 3 203 911
- DE-A1- 4 021 098
- DE-A1- 4 419 351
- DE-A1- 10 114 973
- DE-A1- 10 251 977
- DE-A1- 19 835 316
- DE-C1- 3 424 402
- JP-A- 11 027 985
- JP-A- 2002 010 694

## Beschreibung

Die vorliegende Erfindung betrifft eine Schaltungsanordnung und ein Verfahren zur Steuerung eines Elektromotors, insbesondere einer Waschmaschine.

Aus der DE-A1 44 19 351 ist ein Verfahren zum Bremsen eines invers drehenden, an einem Gleichspannungsnetz betriebenen Synchronmotors bekannt. Dazu ist vorgesehen, dass eine während der Inversdrehung des Rotors in den Wicklungssträngen des Stators induzierte Spannung mit einem Schwellwert verglichen wird und in Abhängigkeit des Vergleichs eine definierte Bestromung der Wicklungsstränge über Schaltmittel, die von einer Kommutierungsvorrichtung angesteuert werden, erfolgt. Durch das in der DE-A1 44 19 351 beschriebene Verfahren ist es möglich, den Rotor aus jeder beliebigen Inversdrehung und insbesondere von jeder beliebigen Drehzahl exakt auf eine bestimmte Rotorstellung abzubremsen und aus dieser den drehrichtigen Hochlauf zu starten.

Weiterhin ist es auch bekannt, Synchronmotoren zur Erhöhung der Drehzahl über die im feldorientierten Betrieb vorgeschriebene Grenzdrehzahl hinaus im Feldschwächbereich zu betreiben. Der Betrieb von Synchronmotoren im Feldschwächbereich ist beispielsweise aus der DE-A1 32 03 911, der DE-C1 34 24 402, der DE-A1 40 21 098 und auch der EP 0 662 266 B1 bekannt.

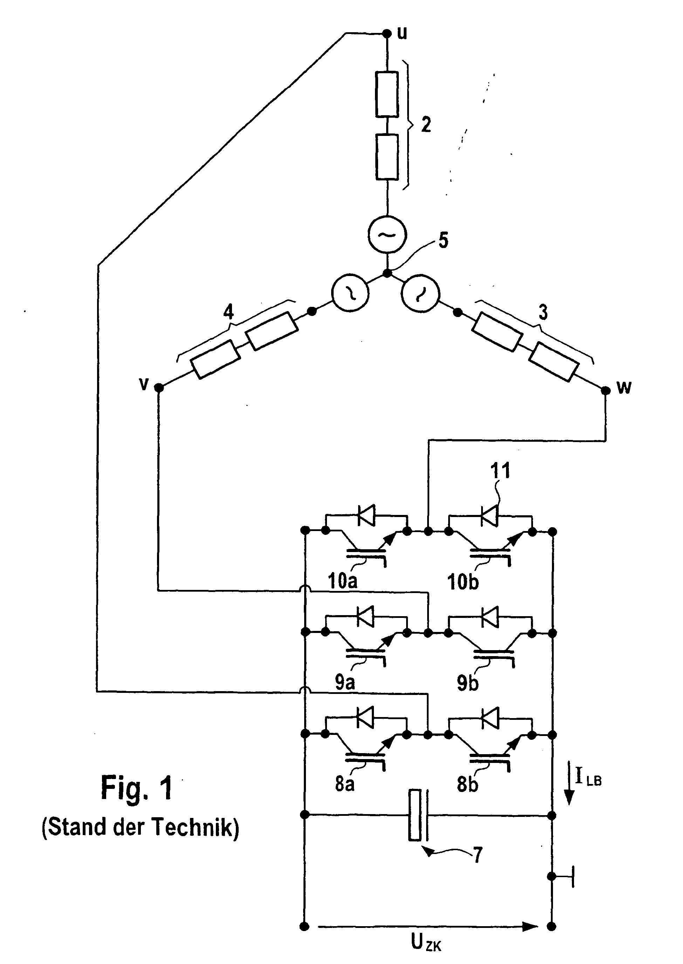

Zur Erläuterung der Problematik beim Stand der Technik ist in Figur 1 beispielhaft das Prinzipschaltbild eines herkömmlichen dreisträngigen, sechspulsigen Synchronmotors mit Permanenterregung gezeigt, wie er auch der vorliegenden Erfindung zugrunde liegt. Die drei Wicklungsstränge 2, 3 und 4 des Stators werden in an sich bekannter Weise über die sechs Schaltelemente 8-10 der Leistungsbrücke 7-11 mit der beispielsweise von einem nicht gezeigten Gleichrichter zugeführten Zwischenkreisspannung U_{ZK} gespeist. Die Schaltelemente 8-10 werden von einer nicht gezeigten Motorsteuerung oder Kommutierungsvorrichtung angesteuert. Wird der gezeigte Synchronmotor im Feldschwächbereich betrieben, so können durch die feldschwächenden Blindströme bei manchen Anwendungen Drehzahlen bis zum vielfachen der vorgegebenen natürlichen Grenzdrehzahl erreicht werden.

Bei kritischen Zuständen, wie zum Beispiel bei einer zu hohen Zwischenkreisspannung U_{ZK}, oder bei einem Ausfall der Steuerelektronik kehren üblicherweise sämtliche Schaltelemente 8-10 in ihren offenen Grundzustand zurück. In diesem Schaltungszustand kann der Zwischenkreiskondensator 7 der Leistungsbrücke 7-11 über die den Schaltelementen 8-10 parallel geschalteten Freilaufdioden 11 aufgeladen werden. Wird der Synchronmotor im feldorientierten Bereich betrieben, so wird der Zwischenkreiskondensator 7 vom Umrichter maximal auf die Zwischenkreisspannung U_{ZK} aufgeladen. Bei Betrieb im Feldschwächbereich kann der Zwischenkreiskondensator 7 bei maximaler Drehzahl gemäß der mit dem Feldschwächbetrieb einhergehenden Erhöhung der Drehzahl bis zum vielfachen der nominalen Zwischenkreisspannung aufgeladen werden. Aus diesem Grund muss bei herkömmlichen Synchronmotor-Steuerungen die in Fig. 1 gezeigte Leistungsbrücke 7-11 und insbesondere der Zwischenkreiskondensator 7 für sehr große Spannungen ausgelegt sein, was höhere Herstellkosten verursacht.

Aus der EP 0 935 336 B ist ein Verfahren zum Betreiben eines mit einem Permanentmagnet-Läufter ausgestatteten Synchronmotors über eine elektronisch kommutierte Brückenschaltung bekannt, die aus einer Motorsteuerung auf Betrieb in Feldschwächung ansteuerbar und auf Bremsbetrieb durch einen Kurzschluss über wenigstens einige der Motor-Wicklungsstränge umschaltbar ist. Dabei erfolgt ein Umschalten der Motorsteuerung auf Kurzschluss, sobald und so lange sich kritische Betriebszustände, insbesondere infolge momentanen Ausfalls oder sonstigen Fehlverhaltens der Motorsteuerung, einstellen.

Durch das Kurzschließen der Motorklemmen über die Leistungsbrücke zum Abbremsen des Motors und/oder bei kritischen Zuständen mittels einer Schutzschaltung kann verhindert werden, dass der Zwischenkreiskondensator der Leistungsbrücke durch die in den Wicklungssträngen des Stators durch die Rotordrehung induzierten Spannungen aufgeladen wird. Aufgrund dieser induzierten Spannungen fließt in den Wicklungssträngen des Stators und über die Schaltmittel außerdem nur ein Strom, der durch die Motorimpedanz begrenzt wird. Bei gängigen Motorauslegungen bleibt dieser Strom im Rahmen der Nennauslegung des Antriebssystems, so dass die Elemente der Leistungsbrücke und insbesondere der Zwischenkreiskondensator kostengünstig ausgelegt werden können.

Insbesondere ist es wichtig, dass der Kurzschluss der Motorklemmen bei kritischen Zustände permanent hergestellt wird, d.h. die Schaltergruppe, die den Kurzschluss herstellt (d.h. die untere Schaltergruppe 8b, 9b, 10b oder die obere Schaltergruppe 8a, 9a, 10a), permanent geschlossen bleiben und nicht getaktet werden, d.h. in der Terminologie der Space-Vector-Modulation, dass ohne Unterbrechung der Nullvektor angelegt wird. Denkbar ist nur, dass zur besseren Verteilung der Verlustleistung auf die Schalter und Ventile in der Leistungsendstufe die beiden möglichen Nullvektoren - Schaltergruppe 8b, 9b, 10b ein, oder Schaltergruppe 8a, 9a, 10a ein - alternierend angelegt werden.

Der Motorsteuerung ist in der EP 0 935 336 B1 eine Default-Beschaltung nachgeschaltet, welche bei hochohmigen Ausgangssignalen, d.h. insbesondere bei einem Ausfall der Motorsteuerung, die Motorklemmen automatisch kurzschließt. Der Stand der Technik der EP 0 935 336 B1 wird im Folgenden anhand der Figuren 1 und 2 kurz beschrieben.

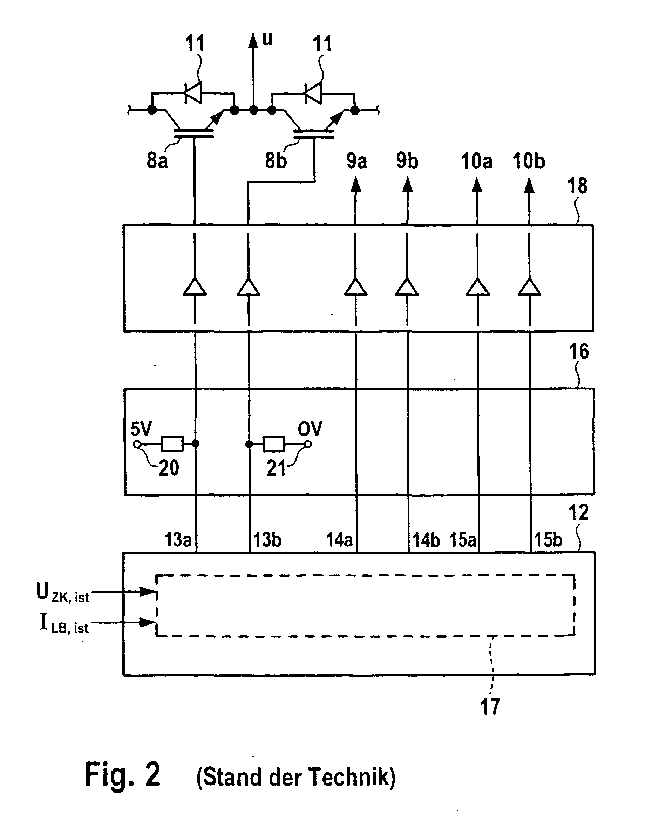

In Fig. 1 ist das Ersatzschaltbild eines elektronisch kommutierten Synchronmotors dargestellt. Der Synchronmotor weist in seinem nicht dargestellten Stator drei in Stern geschaltete Wicklungsstränge 2, 3 und 4 auf die einerseits in einem Sternpunkt 5 und andererseits jeweils mit einer Anschlussklemme u, v, w des Motors verbunden sind. Die Anschlussklemmen u, v und w sind weiter jeweils mit dem Mittelabgriff zwischen zwei Schaltmitteln der Leistungsbrücke 8a und 8b bzw. 9a und 9b bzw. 10a und 10b verbunden. Die Steueranschlüsse der Leistungstransistoren 8-10 sind mit den Ausgängen 13-15 einer Motorsteuerung 12 (Fig. 2) elektrisch verbunden, wobei die Steueranschlüsse der Schaltmittel 8-10 vorzugsweise über MOS-Gate Driver 18 angesteuert werden. Die MOS-Gate Driver 18 dienen dabei im wesentlichen zur Pegelanpassung der Spannungspegel der Ausgänge 13 - 15 der Motorsteuerung 12 an die Steueranschlüsse der Leistungstransistoren 8 - 10.

Im Spannungszwischenkreis ist ein Zwischenkreiskondensator 7 geschaltet, der als Glättungskondensator für die Zwischenkreisspannung U_{ZK} dient. Ferner ist zu den Schaltmitteln 8-10 jeweils eine Freilaufdiode 11 mit entgegen gesetzter Durchlassrichtung parallel geschaltet.

In die Motorsteuerung 12 ist eine in Fig. 2 schematisch dargestellte Schutzschaltung 17 integriert, die zum Abbremsen des Motors und bei kritischen Zuständen die Motorklemmen u, v und w kurzschließt, indem entweder die oberen drei Schaltmittel 8a, 9a und 10a oder die unteren drei Schaltmittel 8b, 9b und 10b geschlossen werden. In der Terminologie der Space Vector Modulation wird einer der beiden Null-Vektoren [000] oder [111] angelegt. Kritische Zustände können beispielsweise sein eine zu hohe oder zu niedrige Zwischenkreisspannung U_{ZK} oder ein Überstrom I_{LB} im Kreis der Leistungsbrücke 7-11. Zur Erkennung solcher kritischen Zustände wird sowohl die Zwischenkreisspannung U_{ZK} als auch der in der Leistungsbrücke 7-11 fließende Strom I_{LB} überwacht und die ermittelten Messsignale U_{ZK,ist} und I_{LB,ist} der Motorsteuerung 12 zugeführt. Im kritischen Fall wächst die Zwischenkreisspannung im allgemeinen langsam, so dass die Motorsteuerung 12 rechtzeitig reagieren kann.

In diesem Bremsmodus fließt aufgrund der in den Wicklungssträngen 2-4 durch die Rotordrehung induzierten Spannungen ein Strom, der durch die Motorimpedanz begrenzt wird. Der Motorsteuerung 12 ist eine so genannte Default-Beschaltung 16 nachgeschaltet, die immer dann wirksam wird, wenn die Motorsteuerung 12 und damit auch die Schutzschaltung 17 ausfällt und die Ausgänge 13-15 der Motorsteuerung 12 hochohmig werden. Ein Ausfall der Motorsteuerung 12 kann beispielsweise durch elektromagnetische Störungen oder versehentlich gemessene Überströme I_{LB} verursacht werden. In einem solchen Fall sorgt die Default-Beschaltung 16 dafür, dass die MOS-Gate Driver 18 die Schaltmittel 8-10 im oben beschriebenen Bremsmodus ansteuern, d.h. die Motorklemmen u, v und w kurzschließen.

Die der Motorsteuerung 12 nachgeschaltete Default-Beschaltung 16 besteht im einfachsten, in Fig. 2 gezeigten Fall aus einer zusätzliche Spannungsversorgung mit den Anschlüssen 20 und 21. Dabei ist die Ansteuerung des oberen Schaltmittels 8a auf positives Potential, beispielsweise + 5 V, und die Ansteuerung des unteren Schaltmittels 8b auf Grundpotential, d.h. 0 V, gelegt. Durch diese Default-Beschaltung 16 wird bei einem Ausfall der Motorsteuerung 12, d.h. wenn die Ausgänge 13a und 13b hochohmig werden, das obere Schaltmittel 8a aufgrund des Potentials 20 durch den MOS-Gate Driver 18 geschlossen, während das untere Schaltmittel 8b weiterhin offen bleibt. In gleicher Weise ist es möglich, die beiden Anschlüsse 20 und 21 der Default-Beschaltung 16 zu vertauschen und auf diese Weise die unteren Schaltmittel 8b, 9b und 10b zu schließen, während die oberen Schaltmittel 8a, 9a und 10a offen bleiben.

Im Falle einer ordnungsgemäß funktionierenden Motorsteuerung 12, d.h. wenn die Motorsteuerung nicht ausgefallen ist, werden die von der Default-Beschaltung 16 angelegten Potentiale von den Ausgangssignalen 13-15 der Motorsteuerung 12 bzw. der in der Motorsteuerung 12 integrierten Schutzschaltung 17 überschrieben. Die Kleinsignalspannungsversorgung für die Motorsteuerung 12 oder zumindest für die MOS-Gate Driver 18 und die Default-Beschaltung 16 wird dabei vorteilhafterweise aus der Zwischenkreisspannung U_{ZK} abgeleitet, so dass auf zusätzliche Spannungsversorgungsquellen verzichtet werden kann.

Aus International Rectifier "Data Sheet No. PD60166 revS IR2136/ IR21362/IR21363/ IR21365/ IR21366/ IR21367/ IR21368 (J&S) & (PbF)" ist ein Treiber für hochvolt, Hochgeschwindigkeits-MOSFETs und IGBTs bekannt. Dieser weist jeweils drei unabhängige Ausgänge für die positive und negative Anschlussseite (engl. high side and low side) für 3-Phasen Applikationen auf. Hochvolt IC-Technologie ermöglicht eine monolithische Konstruktion. Logische Eingänge sind kompatibel mit CMOS or LSTTL Ausgängen, bis hinab zu 3.3V Logikspannung. Eine Stromüberwachungsfunktion, die alle sechs Ausgänge abschaltet, kann mittels eines zusätzlichen externen Widerstands als Stromfühler (current sense) realisiert werden. Ein Freigabefunktion ist vorhanden, um alle sechs Ausgänge gleichzeitig abzuschalten. Ein Fehlersignal wird bereitgestellt, dass anzeigt, dass ein Überstrom oder eine Unterspannung eingetreten ist. Überstromfehler werden automatisch nach einer zeitlichen Verzögerung beseitigt, wobei die zeitliche Verzögerung mittels eines an einen Eingang angeschlossenes RC Netzwerkes programmiert werden kann.

Ferner offenbart die JP 2002-010694 A eine Schaltungsanordnung zu Ansteuerung eines Elektromotors mit einem Wechselrichter, einer Steuereinheit zum Ansteuern der Leistungsschalter des Wechselrichters und einem Überwachungsschaltkreis. Wenn der Überwachungsschaltkreis eine Überspannung des Spannungszwischenkreises erfasst, gibt er dieses Detektionsergebnis an die Steuereinheit weiter, welche dann die Anschlussklemmen des oberen oder unteren Zweiges des Elektromotors kurzschließt.

Der Erfindung liegt die Aufgabe zur Grunde, die Sicherheitsfunktionen einer Motorsteuerung weiter zu entwickeln. Diese Aufgabe wird durch die Schaltungsanordnung mit den Merkmalen des Patentanspruchs 1 als auch durch das Steuerungsvorfahren mit den Merkmalen des Patentanspruchs 6 gelöst. Vorteilhafte Weiterbildungen der Erfindung sind Gegenstand von Unteransprüchen.

Demgemäß ist eine Schaltungsanordnung zur Ansteuerung eines Elektromotors, insbesondere einer Waschmaschine, vorgesehen. Diese Schaltungsanordnung weist Leistungsschalter auf, die mit Anschlussklemmen des Elektromotors und mit einem Spannungszwischenkreis verbunden sind. Weiterhin weist die Schaltungsanordnung einen Treiberschaltkreis auf, der mit dem Spannungszwischenkreis und den Leistungsschaltern verbunden ist. Zudem weist die Schaltungsanordnung eine Steuereinheit auf, die mit dem Treiberschaltkreis verbunden ist. Eine derartige Steuereinheit ist vorzugsweise ein Mikrocontroller.

Die Steuereinheit ist ausgebildet und eingerichtet, Steuersignale zur Steuerung zumindest einer Drehgeschwindigkeit des Elektromotors zu generieren. Vorzugsweise werden durch diese Steuereinheit zumindest die dem Elektromotor zugeordneten Funktionen der Waschmaschine gesteuert. Hierzu ist vorzugsweise vorgesehen, dass die Steuereinheit durch einen Taktgeber, insbesondere einen Schwingquarz, getaktet ist, um einen Programmablauf eines Verfahrens in der Steuereinheit zu ermöglichen.

Das Wesen der Erfindung besteht darin, dass der Treiberschaltkreis ausgebildet ist, Kurzschlusssteuersignale zur Ansteuerung der Leistungsschalter zu generieren, die unabhängig von den Steuersignalen der Steuereinheit einen Kurzschluss der mit den Leistungsschaltern verbundenen Anschlussklemmen des Elektromotors bewirken. Vorzugsweise werden zur Bewirkung des Kurzschlusses alle Anschlussklemmen des Elektromotors auf einen Pol des Spannungszwischenkreises geschalten werden. Hierzu werden vorzugsweise die zu diesem Pol zugeordneten Leistungsschalter angesteuert, während die verbleibenden Leistungsschalter hochohmig verbleiben.

Der Treiberschaltkreis ist dabei ausgebildet die Kurzschlusssteuersignale in Abhängigkeit von einer Detektion einer Überspannung im Spannungszwischenkreis zu generieren. Hierzu ist der Treiberschaltkreis ausgebildet die Zwischenkreisspannung mit einem Sollspannungsbereich zu vergleichen. Eine vorteilhafte Ausgestaltung der Erfindung sieht vor, das der Vergleich durch einen Schwellwertschalter des Treiberschaltkreises erfolgt. Vorzugsweise ist der Schwellwertschalter mit einer Ansteuerlogik des Treiberschaltkreises verbunden, der in Abhängigkeit von dem Ausgangssignal des Schwellwertschalters die Kurzschlusssteuersignale erzeugt.

In einer vorteilhaften Weiterbildung der Erfindung weist der Treiberschaltkreis für die Detektion einen Eingang zur Messung der Zwischenkreisspannung auf. Eine erste bevorzugte Ausgestaltung der Erfindung sieht zur Messung einen Komparator vor, dessen Eingang mit der Spannung des Spannungszwischenkreises gekoppelt ist. Neben der Messung durch einen Komparator sind natürlich auch andere Messverfahren möglich, die eine schnelle Reaktion des Treiberschaltkreises auf Spannungsänderungen im Spannungszwischenkreis ermöglichen.

Um insbesondere einen Komparator für kleinere Spannungen als die Zwischenkreisspannung verwenden zu können, ist in einer bevorzugten Ausgestaltung der Erfindung vorgesehen, dass der Treiberschaltkreis einen Spannungsteiler, insbesondere aus Widerständen oder Kondensatoren aufweist, der mit dem Spannungszwischenkreis verbunden ist und eine zur Zwischenkreisspannung im Wesentlichen proportionale Messspannung erzeugt. Dies Messspannung wird vorteilhafterweise an den Eingang des Komparator angelegt.

Die Erfindung weiterbildend ist ein Schaltnetzteil vorgesehen, das mit dem Spannungszwischenkreis verbunden ist und für die Steuereinheit und für den Treiberschaltkreis eine Versorgungsspannung erzeugt.

Um eine zusätzlich Sicherheitsredundanz zu ermöglichen ist in einer vorteilhaften Weiterbildung der Erfindung vorgesehen, dass die Steuereinheit zusätzlich zum Treiberschaltkreis ausgebildet ist die Zwischenkreisspannung zu messen und die Leistungstreiber in Abhängigkeit von dem Messergebnis mittels der Steuersignale zu steuern. Hierzu weist die Steuereinheit vorzugsweise einen Analogeingang auf, der eine Abtastung der Zwischenkreisspannung und/oder einer Messspannung bewirkt.

Ein weiterer Aspekt der Erfindung ist ein Verfahren zur Steuerung eines Elektromotors, insbesondere einer Waschmaschine, indem eine Steuereinheit Steuersignale zur Steuerung zumindest einer Drehgeschwindigkeit des Elektromotors generiert, die über einen Treiberschaltkreis Leistungsschalter zur Bestromung des Elektromotors ansteuern. Weiterhin wird zeitgleich zur Generierung der Steuersignale durch den Treiberschaltkreis eine an den Leistungsschaltern anliegende Zwischenkreisspannung gemessen.

In Abhängigkeit von der Zwischenkreisspannung generiert der Treiberschaltkreis Kurzschlusssteuersignale, die unabhängig von den Steuersignalen der Steuereinheit die mit den Leistungsschaltern verbundenen Motorklemmen kurzschließen. Ein Kurzschließen der Motorklemmen erfolgt dabei, wenn die gemessene Zwischenkreisspannung einen Sollspannungsbereich überschreitet.

Vorteilhafterweise weist der Spannungszwischenkreis zumindest zwei Anschlusspole auf. Eine bevorzugte Weiterbildung der Erfindung sieht nun vor, dass die Kurzschlusssteuersignale eine erste Gruppe der Leistungsschalter, die mit einem ersten Anschlusspol eines Spannungszwischenkreises verbunden sind und eine zweite Gruppe der Leistungsschalter, die mit einem zweiten Anschlusspol des Spannungszwischenkreises verbunden sind, abwechselnd ansteuern. Dies bewirkt, dass der Kurzschluss alternierend über verschiedene Transistoren erfolgt und sich die Verlustleistung entsprechend dem Tastverhältnis auf die erste Gruppe und die zweite Gruppe der Leistungsschalter verteilt.

Eine bevorzugte Weiterbildung der Erfindung sieht vor, dass der Treiberschaltkreis Öffnungsteuersignale generiert, die unabhängig von den Steuersignalen der Steuereinheit alle Leistungsschalter öffnen, wenn die gemessene Zwischenkreisspannung den Sollspannungsbereich unterschreitet. Hierzu weist der Treiberschaltkreis vorzugsweise einen zweiten Schwellwertschalter auf. Bevorzugt ist vorgesehen, dass zumindest einer der beiden Schwellwertschalter eine Hysterese aufweist.

Ein weiterer Aspekt der Erfindung ist eine Verwendung einer zuvor beschriebenen Schaltungsvorrichtung und/oder eines zuvor beschriebenen Verfahrens zur Steuerung der Funktionen einer Waschmaschine, insbesondere zur Steuerung der Geschwindigkeit der Trommel.

Im Folgenden wird die Erfindung anhand eines zeichnerisch dargestellten Ausführungsbeispiels näher erläutert.

### Dabei zeigen

- Fig. 1: eine Motorbeschaltung mit Leistungsschaltern nach dem Stand der Technik,
- Fig. 2: ein Blockschaltbild eines Treiberschaltkreises nach dem Stand der Technik, und
- Fig.3: eine erfindungsgemäße Beschaltung eines Elektromotors einer Waschmaschine mit Leistungsschaltern, einem Treiberschaltkreis und eine Steuereinheit.

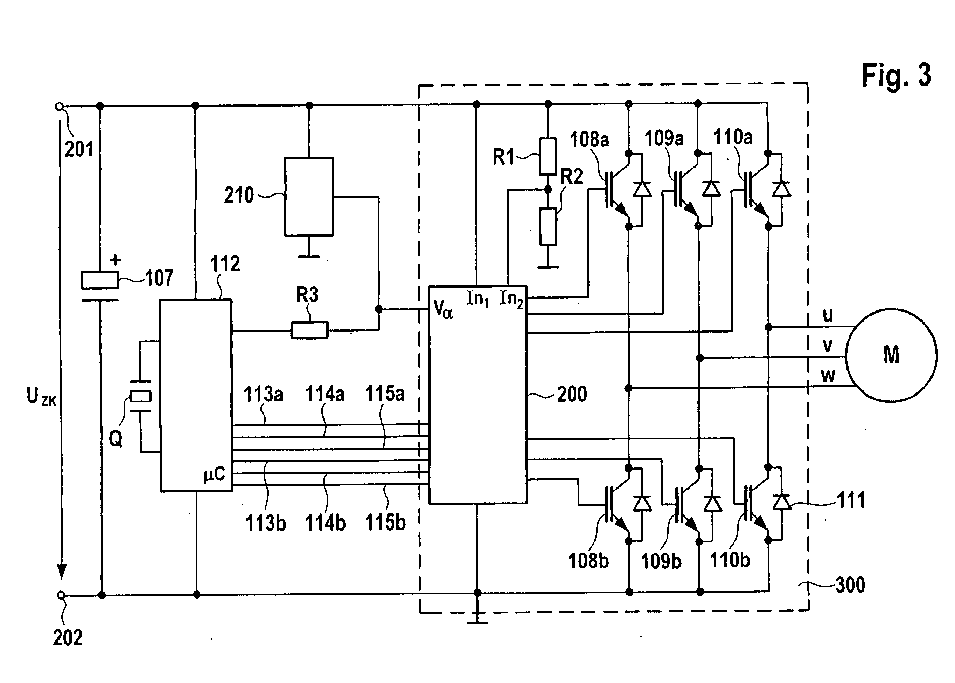

In Fig. 3 ist ein Ausführungsbeispiel einer erfindungsgemäßen Weiterentwicklung der Lösung des Standes der Technik der Figuren 1 und 2 dargestellt: Der Elektromotor M ist beispielsweise ein 3-phasiger Asynchronmotor oder ein Synchronmotor mit Permanent-Magneten. Dieser Elektromotor M weist die drei Anschlüsse u, v und w auf und ist in Fig. 3 als vereinfachtes Symbol dargestellt. Jeder Anschluss u, v, w ist mit jeweils zwei Leistungsschaltern 108a, 108b, 109a, 109b, beziehungsweise 110a, 110b verbunden. Diese Leistungsschalter 108a, 108b, 109a, 109b, 110a, 110b sind beispielsweise IGBT's oder FET's. Zusätzlich ist jeweils eine Diode 111 in Sperrpolung vorgesehen. Die Leistungsschalter 108a, 108b, 109a, 109b, 110a, 110b bilden Zusammen mit einem Treiberschaltkreis 200 eine Leistungsendstufe 300. Diese Leistungsendstufe 300 kann in einem Gehäuse realisiert werden (Leistungsmodul). Weiterhin können eine in Fig. 3 nicht dargestellte Gleichrichterbrücke zur Versorgung des Zwischenkreises aus einem Wechselspannungsnetz, ein Temperatursensor und weitere Bauelemente zusammen mit der Leistungsendstufe 300 in ein Leistungsmodul integriert sein.

Die Leistungsendstufe 300 ist mit den bereits erwähnten Motoranschlüssen u, v und w und zusätzlich mit einem ersten Pol 201 eines Spannungszwischenkreis und mit einem zweiten Pol 202 des Spannungszwischenkreises verbunden. Zwischen dem ersten Pol 201 und dem zweiten Pol 202 liegt die Zwischenkreisspannung U_{ZK} an. Die Zwischenkreisspannung U_{ZK} wird mittels einer Zwischenkreiskapazität 107 geglättet. Weiterhin weist die Leistungsendstufe Kleinsignal-Logik-Eingänge 113a, 114a, 115a, 113b, 114b und 115b auf, die mit einer Steuereinheit 112, insbesondere einem Mikrocontroller (µC) verbunden sind. Mittels der Kleinsignal-Logik-Eingänge 113a, 114a, 115a, 113b, 114b und 115b steuert die Steuereinheit 112 über den Treiberschaltkreis 200 die Leistungsschalter 108a, 108b, 109a, 109b, 110a, 110b einzeln oder in Gruppen an, um den Motor M mit der benötigten Geschwindigkeit in der gewünschten Drehrichtung zu betreiben. Die Ansteuerung erfolgt dabei in Abhängigkeit von einem Programm in der Steuereinheit 112, die hierzu mittels eines Quarzoszillators Q getaktet ist.

Generell besteht die Gefahr, dass die Leistungsendstufe 300 zur Motoransteuerung durch das Rückspeisen der Motorenergie zustört wird, falls diese Rückspeisung zu einer unzulässig hohen Spannung (U_{ZK}) im Spannungszwischenkreis führt. Dies kann vielfältige Ursachen haben, wie z.B. die Fehlfunktion der Steuereinheit 112 oder der nachfolgenden Signalstrecke bis zur Leistungsendstufe 300. Durch die Fehlfunktion mit der Folge einer falschen Schaltsequenz für die Leistungsschalter 108a, 108b, 109a, 109b, 110a, 110b kann der Motor M in den generatorischen Betrieb übergehen. Dabei wird der Spannungszwischenkreis auf eine unzulässig hohe Spannung aufgeladen, wodurch die Leistungsendstufe 300 oder der Spannungszwischenkreiskondensator 107 zerstört werden.

Um dies zu verhindern, weist der Treiberschaltkreis 200 eine Logik und eine Messeinheit auf, die sich selbst vor generatorischer Überspannung durch den Motor M schützt und dabei für verschiedene Motortypen einsetzbar ist. Dies soll in Fig. 3 beispielhaft mit einer Leistungsbrücke sowohl für 3-phasige Asynchronmotoren als auch für Synchronmotoren mit Permanent-Magneten dargestellt sein. Für den Überspannungsschutz schließt der Treiberschaltkreis 200 alle Motorklemmen u, v und w auf einen Pol 201 oder 202 des Spannungszwischenkreises kurz, indem entweder eine erste Gruppe der Leistungsschalter 1 08a, 109a und 110a oder eine zweite Gruppe der Leistungsschalter 108b, 109b, 11 0b angesteuert werden, so dass die zugehörigen Leistungstransistoren durchschalten.

Hierdurch kann kein Strom aus dem Motor M mehr auf den Spannungszwischenkreis schließen. Damit wird die generatorische oder induktive Energie des Motors M in dem Motor M selbst freigesetzt. Um die Spannung U_{ZK} des Spannungszwischenkreises zu messen, ist ein Spannungsteiler R1, R2 vorgesehen, der die Zwischenkreisspannung U_{ZK} auf ein von dem Treiberschaltkreis 200 erfassbares Maß herunterteilt. Zusätzlich ist auch die Steuereinheit 112 zur Messung der Zwischenkreisspannung U_{ZK} mit dem Spannungszwischenkreis verbunden, um den Motor M ebenfalls in Abhängigkeit von der Zwischenkreisspannung U_{ZK} zu steuern. Dies ermöglicht in der Steuereinheit 112 und in dem Treiberschaltkreis 200 die Ausbildung von redundanten Sicherheitsfunktionen. Um die Versorgungsspannung der Logik sowohl der Steuereinheit 112 als auch des Treiberschaltkreises 200 generatorisch aus dem Motor zu gewährleisten, ist ein aus der Zwischenkreisspannung U_{ZK} gespeistes Schaltnetzteil 210 vorgesehen, dessen Ausgang sawohl mit dem Versorgungsspannungsanschluss V_{CC} des Treiberschaltkreises 200 als auch über einen Widerstant R3 mit des Steuereinheit 112 verbunden ist.

Weiterhin weist der Treiberschaltkreis 200 die Funktion auf, dass sämtliche Leistungsschalter 108a, 108b, 109a, 109b, 110a, 110b hochohmig geschaltet werden, wenn die Zwischenkreisspannung U_{ZK} unter ein kritisches Maß sinkt, dass die Funktionalität der Steuerung durch die Steuereinheit 112 und den Treiberschaltkreis 200 nicht mehr gewährleisten kann. In diesem Fall bewirkt die Generatorwirkung eines drehenden Synchronmotors M eine gewünschte Aufladung der Zwischenkreiskapazität 107, so dass für die Schaltkreise 112 und 200 wieder eine ausreichende Versorgungsspannung zur Verfügung steht.

### Bezugszeichenliste der Fig. 3

- R1, R2, R3: Widerstand
- 112, µC: Steuereinheit, Mikrocontroller
- Q: Schwingquarz
- 200: Treiberschaltkreis
- 210: Netzteil, Schaltnetzteil
- 107: Zwischenkreiskondensator
- 201, 202: Pol des Spannungszwischenkreises
- U_{ZK}: Zwischenkreisspannung
- M: Elektromotor, Synchronmotor, Asynchronmotor
- u, v, w: Anschlussklemmen des Motors
- 108a, 108b, 109a, 109b, 110a, 110b: Leistungsschalter, MOSFET, IGBT
- 111: Diode
- 300: Leistungsendstufe
- In₁, In₂: Eingang des Treiberschaltkreises
- V_{CC}: Versorgungsspannungsanschluss des Treiberschaltkreises
- 113a, 114a, 115a, 113b, 114b, 115b: Signalleitungen, Logik-Eingänge der Leistungsendstufe

## Patentansprüche

1. Schaltungsanordnung zur Ansteuerung eines Elektromotors (M), insbesondere einer Waschmaschine, mit
- Leistungsschaltern (108a, 108b, 109a, 109b, 110a, 110b), die mit Anschlussklemmen (u, v, w) des Elektromotors (M) und mit einem Spannungszwischenkreis verbunden sind;
- einem Treiberschaltkreis (200), der mit dem Spannungszwischenkreis und den Leistungsschaltern (108a, 108b, 109a, 109b, 110a, 110b) verbunden ist; und
- einer Steuereinheit (112), insbesondere einem Mikrocontroller (µC), die mit dem Treiberschaltkreis (200) verbunden ist und ausgebildet und eingerichtet ist, Steuersignale (113a, 113b, 114a, 114b, 115a, 115b) zur Steuerung zumindest einer Drehgeschwindigkeit des Elektromotors (M) zu generieren, die die Leistungsschalter (108a, 108b, 109a, 109b, 110a, 110b) über den Treiberschaltkreis (200) ansteuern,
**dadurch gekennzeichnet, dass**
der Treiberschaltkreis (200) ausgebildet ist, Kurzschlusssteuersignale zur Ansteuerung der Leistungsschalter (108a, 108b, 109a, 109b, 110a, 110b) zu generieren, die unabhängig von den Steuersignalen der Steuereinheit (112) einen Kurzschluss der mit den Leistungsschaltern (108a, 108b, 109a, 109b, 110a, 110b) verbundenen Anschlussklemmen (u, v, w) des Elektromotors (M) bewirken; und
der Treiberschaltkreis (200) ausgebildet ist, die Kurzschlusssteuersignale in Abhängigkeit von einer Detektion einer Überspannung des Spannungszwischenkreises über einen Sollspannungsbereich zu generieren.

2. Schaltungsanordnung nach Anspruch 1,
**dadurch gekennzeichnet, dass**
der Treiberschaltkreis (200) einen Eingang (In₁, In₂) zur Messung der Zwischenkreisspannung (U_{ZK}) aufweist.

3. Schaltungsanordnung nach einem der vorhergehenden Ansprüche,
**dadurch gekennzeichnet, dass**
der Treiberschaltkreis (200) einen Spannungsteiler (R1, R2), insbesondere aus Widerständen aufweist, der mit dem Spannungszwischenkreis verbunden ist und eine zur Zwischenkreisspannung (U_{ZK}) im Wesentlichen proportionale Messspannung erzeugt.

4. Schaltungsanordnung nach einem der vorhergehenden Ansprüche,
**gekennzeichnet durch**
ein Schaltnetzteil (210), das aus dem Spannungszwischenkreis gespeist wird und für die Steuereinheit (112) und für den Treiberschaltkreis (200) eine Versorgungsspannung erzeugt.

5. Schaltungsanordnung nach einem der vorhergehenden Ansprüche,
**dadurch gekennzeichnet, dass**
die Steuereinheit (112) zusätzlich zum Treiberschaltkreis (200) ausgebildet ist die Zwischenkreisspannung (U_{ZK}) zu messen und die Leistungsschalter (108a, 108b, 109a, 109b, 110a, 110b) in Abhängigkeit von dem Messergebnis mittels der Steuersignale zu steuern.

6. Verfahren zur Steuerung eines Elektromotors (M), insbesondere einer Waschmaschine, bei dem eine Steuereinheit (112) Steuersignale (113a, 113b, 114a, 114b, 115a, 115b) zur Steuerung zumindest einer Drehgeschwindigkeit des Elektromotors (M) generiert, die über einen Treiberschaltkreis (200) Leistungsschalter (108a, 108b, 109a, 109b, 110a, 110b) zur Bestromung des Elektromotors (M) ansteuern, **dadurch gekennzeichnet, dass**
zeitgleich zur Generierung der Steuersignale der Treiberschaltkreis (200) eine an den Leistungsschaltern (108a, 108b, 109a, 109b, 110a, 110b) anliegende Zwischenkreisspannung (U_{ZK}) misst, und
der Treiberschaltkreis (200) Kurzschlusssteuersignale generiert, die unabhängig von den Steuersignalen der Steuereinheit (112) die mit den Leistungsschaltern (108a, 108b, 109a, 109b, 110a, 110b) verbundenen Motorklemmen (u, v, w) kurzschließen, wenn die gemessene Zwischenkreisspannung (U_{ZK}) einen Sollspannungsbereich überschreitet.

7. Verfahren nach Anspruch 6,
**dadurch gekennzeichnet, dass**
die Kurzschlusssteuersignale eine erste Gruppe der Leistungsschalter (108a, 109a, 110a), die mit einem ersten Anschlusspol (201) eines Spannungszwischenkreises verbunden sind und eine zweite Gruppe der Leistungsschalter (108b, 109b, 110b), die mit einem zweiten Anschlusspol (202) des Spannungszwischenkreises verbunden sind, abwechselnd ansteuern.

8. Verfahren nach einem der Ansprüche 6 oder 7,
**dadurch gekennzeichnet, dass**
der Treiberschaltkreis (200) Öffnungsteuersignale generiert, die unabhängig von den Steuersignalen der Steuereinheit (112) alle Leistungsschalter (108a, 108b, 109a, 109b, 110a, 110b) öffnen, wenn
die gemessene Zwischenkreisspannung (U_{ZK}) den Sollspannungsbereich unterschreitet.

9. Verwendung einer Schaltungsvorrichtung nach einem der Ansprüche 1 bis 5 und/oder eines Verfahrens nach einem Ansprüche 6 bis 8 zur Steuerung der Funktionen einer Waschmaschine, insbesondere zur Steuerung der Geschwindigkeit der Trommel.

## Claims

1. Circuit arrangement for driving an electric motor (M), in particular of a washing machine, having
- power switches (108a, 108b, 109a, 109b, 110a, 110b), which are connected to connection terminals (u, v, w) of the electric motor (M) and to a voltage intermediate circuit,
- a driver circuit (200), which is connected to the voltage intermediate circuit and to the power switches (108a, 108b, 109a, 109b, 110a, 110b), and
- a control unit (112), in particular a microcontroller (µC), which is connected to the driver circuit (200) and is designed and set up to generate control signals (113a, 113b, 114a, 114b, 115a, 115b) for the purpose of controlling at least one rotation speed of the electric motor (M), which rotation speed drives the power switches (108a, 108b, 109a, 109b, 110a, 110b) via the driver circuit (200),
**characterized in that** the driver circuit (200) is designed to generate short-circuit control signals for the purpose of driving the power switches (108a, 108b, 109a, 109b, 110a, 110b), which bring about a short circuit of the connection terminals (u, v, w), which are connected to the power switches (108a, 108b, 109a, 109b, 110a, 110b), of the electric motor (M) independently of the control signals from the control unit (112); and
the driver circuit (200) is designed to generate the short-circuit control signals as a function of a detection of an overvoltage of the voltage intermediate circuit over a desired voltage range.

2. Circuit arrangement according to Claim 1,
**characterized in that**
the driver circuit (200) has an input (In₁, In₂) for the purpose of measuring the intermediate circuit voltage (U_{IC}).

3. Circuit arrangement according to one of the preceding claims,
**characterized in that**
the driver circuit (200) has a voltage divider (R1, R2), in particular comprising resistors, which is connected to the voltage intermediate circuit and produces a measured voltage which is essentially proportional to the intermediate circuit voltage (U_{IC}).

4. Circuit arrangement according to one of the preceding claims,
**characterized by**
a switched mode power supply (210), which is fed from the voltage intermediate circuit and produces a supply voltage for the control unit (112) and for the driver circuit (200).

5. Circuit arrangement according to one of the preceding claims,
**characterized in that**
the control unit (112), in addition to the driver circuit (200), is designed to measure the intermediate circuit voltage (U_{IC}) and to control the power switches (108a, 108b, 109a, 109b, 110a, 110b) as a function of the measurement result by means of the control signals.

6. Method for controlling an electric motor (M), in particular of a washing machine, in which method a control unit (112) generates control signals (113a, 113b, 114a, 114b, 115a, 115b) for the purpose of controlling at least one rotation speed of the electric motor (M), said signals driving power switches (108a, 108b, 109a, 109b, 110a, 110b) via a driver circuit (200) for the purpose of supplying current to the electric motor (M),
**characterized in that** the driver circuit (200) measures an intermediate circuit voltage (U_{IC}), which is applied to the power switches (108a, 108b, 109a, 109b, 110a, 110b), at the same time as generating the control signals, and
the driver circuit (200) generates short-circuit control signals, which short-circuit the motor terminals (u, v, w), which are connected to the power switches (108a, 108b, 109a, 109b, 110a, 110b), independently of the control signals from the control unit (112) if
the measured intermediate circuit voltage (U_{IC}) exceeds a desired voltage range.

7. Method according to Claim 6,
**characterized in that**
the short-circuit control signals alternately drive a first group of power switches (108a, 109a, 110a), which are connected to a first connection pole (201) of a voltage intermediate circuit, and a second group of power switches (108b, 109b, 110b), which are connected to a second connection pole (202) of the voltage intermediate circuit.

8. Method according to either of Claims 6 and 7,
**characterized in that**
the driver circuit (200) generates opening control signals, which open all of the power switches (108a, 108b, 109a, 109b, 110a, 110b) independently of the control signals from the control unit (112) if the measured intermediate circuit voltage (U_{IC}) falls below the desired voltage range.

9. Use of a circuit apparatus according to one of Claims 1 to 5 and/or a method according to one of Claims 6 to 8 for the purpose of controlling the functions of a washing machine, in particular for the purpose of controlling the speed of the drum.

## Revendications

1. Circuit destiné à commander un moteur électrique (M), en particulier celui d'un lave-linge, et comportant :
- des commutateurs de puissance (108a, 108b, 109a, 109b, 110a, 110b) reliés à des bornes de raccordement (u, v, w) du moteur électrique (M) et à un circuit intermédiaire de tension,
- un circuit (200) de commutation pilote relié au circuit intermédiaire de tension et aux commutateurs de puissance (10a, 108b, 109a, 109b, 110a, 110b) et
- une unité de commande (112), en particulier un microcontrôleur (µC), reliée au circuit (200) de commutation pilote et configurée et conçue pour délivrer des signaux de commande (113a, 113b, 114a, 114b, 115a, 115b) qui commandent au moins une vitesse de rotation du moteur électrique (M) et qui commandent les commutateurs de puissance (108a, 108b, 109a, 109b, 110a, 110b) par l'intermédiaire du circuit (200) de commutation pilote,
**caractérisé en ce que**
le circuit (200) de commutation pilote est configuré pour délivrer des signaux de court-circuit qui commandent les commutateurs de puissance (108a, 108b, 109a, 109b, 110a, 110b) et qui ont pour effet, indépendamment des signaux de commande de l'unité de commande (112), un court-circuit des bornes de raccordement (u, v, w) du moteur électrique (M) reliées aux commutateurs de puissance (108a, 108b, 109a, 109b, 110a, 110b) et
**en ce que** le circuit (200) de commutation pilote est configuré pour délivrer les signaux de commande de court-circuit en fonction de la détection d'une surtension qui dépasse une plage de tension de consigne dans le circuit intermédiaire de tension.

2. Circuit selon la revendication 1, **caractérisé en ce que** le circuit (200) de commutation pilote présente une entrée (In₁, In₂) qui mesure la tension (U_{ZK}) du circuit intermédiaire.

3. Circuit selon l'une des revendications précédentes, **caractérisé en ce que** le circuit (200) de commutation pilote présente un diviseur de tension (R1, R2), en particulier constitué de résistances, relié au circuit intermédiaire de tension et délivrant une tension de mesure essentiellement proportionnelle à la tension (U_{ZK}) du circuit intermédiaire.

4. Circuit selon l'une des revendications précédentes, **caractérisé par** une partie (210) de commutation au réseau qui est alimentée par le circuit intermédiaire de tension et qui forme la tension d'alimentation pour l'unité de commande (112) et le circuit (200) de commutation pilote.

5. Circuit selon l'une des revendications précédentes, **caractérisé en ce que** l'unité de commande (112) est, en plus du circuit (200) de commutation pilote, configurée pour mesurer la tension (U_{ZK}) du circuit intermédiaire et pour commander au moyen des signaux de commande les commutateurs de puissance (108a, 108b, 109a, 109b, 110a, 110b) en fonction du résultat de la mesure.

6. Procédé de commande d'un moteur électrique (M), en particulier celui d'un lave-linge, dans lequel une unité de commande (112) délivre des signaux de commande (113a, 113b, 114a, 114b, 115a, 115b) qui commandent au moins une vitesse de rotation du moteur électrique (M) et qui commandent par l'intermédiaire d'un circuit (200) de commutation pilote des commutateurs de puissance (108a, 108b, 109a, 109b, 110a, 110b) qui alimentent en courant le moteur électrique (M), **caractérisé en ce que**
en même temps que la production des signaux de commande, le circuit (200) de commutation pilote mesure la tension (U_{ZK}) d'un circuit intermédiaire appliquée sur les commutateurs de puissance (108a, 108b, 109a, 109b, 110a, 110b) et **en ce que** le circuit (200) de commutation pilote délivre des signaux de commande de court-circuit qui, indépendamment des signaux de commande de l'unité de commande (112), mettent en court-circuit les bornes (u, v, w) du moteur reliées aux commutateurs de puissance (108a, 108b, 109a, 109b, 110a, 110b) lorsque la tension (U_{ZK}) mesurée dans le circuit intermédiaire dépasse une plage de tensions de consigne.

7. Procédé selon la revendication 6, **caractérisé en ce que** les signaux de commande de court-circuit commandent en alternance un premier groupe de commutateurs de puissance (108a, 109a, 110a) reliés à un premier pôle de raccordement (201) d'un circuit intermédiaire de tension et un deuxième groupe de commutateurs de puissance (108b, 109b, 110b) reliés à un deuxième pôle de raccordement (202) du circuit intermédiaire de tension.

8. Procédé selon l'une des revendications 6 ou 7, **caractérisé en ce que** le circuit (200) de commutation pilote délivre des signaux de commande d'ouverture qui, indépendamment des signaux de commande de l'unité de commande (112), ouvrent tous les commutateurs de puissance (108a, 108b, 109a, 109b, 110a, 110b) lorsque la tension (U_{ZK}) mesurée sur le circuit intermédiaire n'atteint pas la plage de tension de consigne.

9. Utilisation d'un circuit selon l'une des revendications 1 à 5 et/ou d'un procédé selon l'une des revendications 6 à 8 pour commander les fonctions d'un lave-linge, et en particulier pour commander la vitesse du tambour.
